# FASCICULE DE BREVET EUROPEEN

(11) **EP 1 425 962 B1**
(45) Date de publication et mention de la délivrance du brevet: **08.02.2012**
(21) Numéro de dépôt: 03293023.2
(22) Date de dépôt: 03.12.2003
(51) Int. Cl.: A01K 63/02

(54) **Dispositif de conditionnement d'organismes aquatiques offrant une durée de conservation accrue**
Vorrichtung zum Konditionieren von Wasserorganismen
Device for conditioning aquatic organisms

(30) Priorité: 03.12.2002 FR 0215399
(43) Date de publication de la demande: 09.06.2004
(73) Titulaire: Lopuszanski, Michel, 14123 Cormelles-le-Royal (FR); Lopuszanski, Daniel, 14123 Cormelles-le-Royal (FR)
(72) Inventeur: Lopuszanski, Michel, 14123 Cormelles-le-Royal (FR); Lopuszanski, Daniel, 14123 Cormelles-le-Royal (FR)
(74) Mandataire: Saint-Marc-Etienne, Christophe Andréas

(56) Documents cités:
- EP-A- 0 934 697
- FR-A- 2 801 472
- US-A- 2 091 695
- US-A- 4 089 298
- US-A- 5 377 622
- US-A- 6 041 931

## Description

La présente invention concerne un dispositif de conditionnement d'au moins un organisme ayant pour milieu naturel un milieu aquatique, incluant au moins un récipient destiné à contenir ledit organisme.

Un tel dispositif de conditionnement est notamment connu du brevet français No. 2 704 119. Ce type de dispositif, qui comprend un récipient clos par un couvercle, est couramment utilisé pour le conditionnement d'appâts, et plus particulièrement de vers de pêche, et permet leur commerce par petites quantités modulables selon les besoins des clients. Selon une première technique de distribution et de vente couramment employée dans le marché des appâts de pêche, un conditionnement desdits appâts dans des dispositifs de conditionnement connus est réalisé avant distribution en direction de points de vente au détail, ce qui facilite les manipulations, le transport, le stockage et l'emport par le client des appâts. Les dispositifs de conditionnement ainsi rendus prêts à emporter sont transportés et stockés en ambiance climatisée.

Les dispositifs de conditionnement connus présentent toutefois pour inconvénient un temps de conservation limité des organismes qui y sont conditionnés. Il a en effet été observé que, dès lors que ces organismes sont séparés de leur milieu naturel, une dégradation de leur santé progressive et irréversible s'amorce, les conduisant à une mort certaine au bout de quelques jours. Les appâts tels les vers marins destinés à la pêche sont en effet des organismes extrêmement fragiles qui sont incapables de vivre longtemps hors de leur milieu naturel.

De plus, la dégradation progressive de la santé des organismes contenus dans un récipient de conditionnement entraîne inévitablement une dégradation progressive du reste du contenu du récipient, ainsi éventuellement que du récipient lui-même, laquelle dégradation sera alors visible depuis l'extérieur du récipient s'il est transparent ou réalisé en un matériau bio-dégradable tel du carton. En effet, sous l'effet d'une décomposition rapide des matières solides et liquides rejetées par les organismes contenus dans le dispositif de conditionnement, voire sous l'effet d'une décomposition de certains des organismes eux-mêmes, le récipient devient très vite sale ou se décompose lui-même, et devient alors impropre à la vente.

Par ailleurs, la dégradation d'organismes contenus dans un dispositif de conditionnement est source d'odeurs désagréables qui trahissent un manque de fraîcheur de son contenu.

Pour augmenter la durée de vie et de présentation sous un jour convenable des organismes contenus dans un dispositif de conditionnement, il est donc nécessaire de pratiquer une maintenance contraignante requérant attention, travail et temps. Une telle maintenance consistera par exemple à vérifier quotidiennement le contenu de chaque dispositif de conditionnement afin d'en extraire tout organisme malade ou abîmé avant qu'il ne contamine un de ses voisins, de remplacer les organismes ainsi extraits, et d'éliminer toute pollution de l'intérieur du récipient. Un nettoyage tardif peut précipiter une perte totale du contenu d'un récipient en l'espace de quelques heures.

La durée de vie d'organismes aquatiques stockés dans les dispositifs de conditionnement connus restera de toute façon très limitée, de sorte qu'un professionnel de la vente de tels organismes sera contraint de toujours travailler à flux tendu, et ne disposera que d'une marge de manoeuvre très faible pour gérer son approvisionnement. Un tel professionnel devra évaluer ses besoins aussi précisément que possible, alors que l'ampleur de la demande de la part de ses clients potentiels sera inconnue. Ce professionnel devra en permanence choisir entre risquer de commander à un fournisseur des organismes en trop grande quantité, et risquer ainsi de perdre de la marchandise, et donc de l'argent, en cas de demande sur-évaluée, ou risquer de commander en quantité trop faible, et de se retrouver en rupture de stock et de mécontenter ainsi sa clientèle en cas de demande sous-évaluée.

Selon une deuxième technique de distribution et de vente utilisée dans le marché des appâts de pêche, les organismes aquatiques sont stockés en vrac dans des bassins de type aquarium, et subissent un conditionnement dans des boîtes closes par un couvercle dans les points de vente au détail au moment de l'acte d'achat.

Dans des bassins de stockage de ce type, les organismes aquatiques sont généralement visibles, nageant dans leur bassin ou reposant sur un fond dudit bassin.

Le séjour des organismes aquatiques dans une eau de bonne qualité améliore très sensiblement la conservation desdits organismes par rapport à la première technique de distribution et de vente décrite plus haut, et permet un accroissement de durée de vie desdits organismes de plusieurs jours. De plus, grâce à cette deuxième technique, les organismes peuvent être directement visibles dans leur bassin et apparaissent particulièrement frais pour un client potentiel, qui peut les voir remuer lorsqu'ils sont extraits du bassin de stockage, ce qui est un gage de qualité qui rassure le client.

Cette deuxième technique présente cependant également des inconvénients. En effet, un stockage des organismes aquatiques dans des bassins de grande taille au lieu des récipients de conditionnement n'empêche pas une dégradation desdits organismes, qui semble inexorable dès lors que ces organismes sont séparés de leur milieu naturel, le stockage en bassin ne faisant que ralentir légèrement une telle dégradation. De plus, le stockage en bassin génère un développement d'une pollution importante du fait de la nature périssable des organismes stockés. En outre, dans un milieu liquide, toute pollution se propage très vite, phénomène de propagation qui sera encore amplifié par des mouvements d'eau produits par exemple par une action mécanique de pompes ou de diffuseurs d'air dont pourront être munis les bassins de stockage. Il a été observé que la qualité de l'eau contenue dans de tels bassins se dégrade de façon exponentielle en fonction du temps à mesure qu'approche la fin de vie des organismes qui y sont stockés, car lesdits organismes arrivent alors à un stade où ils polluent de plus en plus, par effet de décomposition de leur matière organique. Au-delà d'un seuil critique, la couleur de l'eau contenue dans le bassin de stockage change brutalement et les organismes présents dans ce bassin y meurent en quelques heures. Une bonne qualité de l'eau contenue dans un bassin de stockage est donc une nécessité vitale pour les organismes qui y sont présents. Par ailleurs, une eau de bassin de nature trouble ne saurait constituer un gage de qualité auprès d'un client potentiel, mais risquerait au contraire de le décourager d'acquérir des organismes présents dans un tel bassin.

La deuxième technique de distribution et de vente décrite ci-dessus exige en conséquence de mettre en oeuvre des procédures de maintenance très rigoureuses, qui prévoient, entre autres actions :
. une élimination quotidienne, voire plus fréquente, de tous les organismes abîmés qui sont susceptibles d'affecter dangereusement la qualité de l'eau du bassin dans lequel ils sont stockés sous l'effet de leur dégradation
. une surveillance attentive du fonctionnement de tout système de traitement d'eau mécanique, biologique, chimique ou physique que le bassin pourrait inclure, ou
. un changement de l'eau, à raison de plusieurs fois par jour, si le bassin est dépourvu de tels système de traitement d'eau.

De plus, selon cette deuxième technique de distribution et de vente, les organismes devront nécessairement être transférés, à un moment ou à un autre, depuis le bassin où ils sont stockés vers une boîte destinée à être livrée à un client final. Un tel transfert est une opération traumatisante pour ces organismes, qui sont extrêmement sensibles, et risquent d'y réagir violemment, le plus souvent en déclenchant un processus réflexe dit d'autotomie qui est un acte de survie consistant pour l'organisme à s'auto-mutiler dans le but d'échapper à un prédateur.

Cette deuxième technique exige en outre, d'une manière générale, beaucoup de manipulations au moment de l'acte d'achat par le client final, car il faut sortir les organismes de leur bassin, les quantifier par comptage, dosage ou pesage, et les conditionner dans une boîte contenant le plus souvent une litière adaptée qui devra, elle aussi, être préparée et dosée. Ces manipulations obligeront en outre un vendeur à se mouiller les mains et à les sécher ensuite pour procéder à des opérations de facturation et d'encaissement sanctionnant l'achat par le client final. Toutes ces manipulations au moment de la vente réclament beaucoup de temps et limitent considérablement le nombre de clients qu'un vendeur peut servir dans un intervalle de temps donné, ce qui peut engendrer des temps d'attente importants, voire décourageants, pour des clients potentiels, et donc préjudiciables au chiffre d'affaire réalisé par le vendeur.

On connaît également le document US-A-5 377 622 qui décrit un dispositif de conditionnement d'au moins un organisme ayant pour milieu naturel un milieu aquatique. Dans ce document, une circulation d'eau est mise en place d'un conteneur à un autre conteneur sous-jacent par l'intermédiaire de plaques perforées 80 qui, d'une part, supporte ledit organisme et, d'autre part, laisse passer les gouttes d'eau d'un étage à un autre.

L'inconvénient d'un système, tel qu'il est décrit dans ce document, est sa relative complexité de mise en oeuvre.

La présente invention a pour but de remédier dans une large mesure aux inconvénients décrits plus haut, en proposant un dispositif de conditionnement qui permet de circonvenir le problème de la conservation d'organismes aquatiques qui sont extrêmement périssables dès l'instant où ils sont séparés de leur milieu naturel.

L'un des buts de invention est de réduire dans une large mesure la nécessité de vérifier quotidiennement, voire plusieurs fois par jour, si les organismes destinés à la vente sont en bonne santé.

Un autre but de invention est de réduire dans une large mesure la nécessité de manipuler des récipients de conditionnement ou de surveiller la qualité de l'eau de bassins de stockage des organismes destinés à la vente.

Un autre but de l'invention est de rendre possible une conservation de longue durée, pouvant aller jusqu'à plusieurs mois, d'organismes aquatiques destinés à la vente dans des conditions avantageuses en termes de qualité et de fraîcheur desdits organismes.

Un autre but de l'invention est d'offrir une méthode de conservation, de présentation et de vente de tels organismes qui soit simple, efficace et pratique à mettre en oeuvre par un vendeur au détail.

Un autre but de l'invention est de permettre une présentation séduisante et attractive de ces organismes, apte à attirer l'attention d'un client potentiel et à l'encourager à procéder à un achat.

En effet, un dispositif de conditionnement conforme au paragraphe introductif est caractérisé selon l'invention en ce qu'il est muni d'un couvercle destiné à recouvrir au moins partiellement une surface supérieure du récipient, ledit récipient présentant une entrée et une sortie d'eau respectivement destinées à recevoir et à délivrer un flux d'eau traversant ledit récipient.

Selon l'invention, le récipient contenant les organismes aquatiques est clos par un couvercle pendant le stockage desdits organismes, de sorte qu'un achat desdits organismes se traduira par une simple remise du dispositif de conditionnement au client et n'occasionnera aucune manipulation qui serait traumatisante pour lesdits organismes et gênante pour le vendeur. Cependant, l'écoulement d'un flux d'eau au travers du dispositif de conditionnement, rendu possible grâce à l'invention pendant le stockage des organismes aquatiques préalablement à leur vente et sur les lieux mêmes de la vente au détail, permet une oxygénation continue desdits organismes. Cet écoulement d'eau permet également d'apporter auxdits organismes aquatiques tous éléments nécessaires à une vie équilibrée de ces organismes, tels des sels minéraux, des nutriments et des oligo-éléments, et permet en outre d'évacuer toute pollution générée par l'activité biologique normale de ces organismes, c'est-à-dire tous déchets solides, liquides ou gazeux qu'ils pourraient produire. L'écoulement du flux d'eau prévu selon l'invention permet en quelque sorte de recréer au sein du dispositif de conditionnement un écosystème semblable au milieu naturel des organismes contenus dans le récipient, ce qui permet d'allonger leur durée de vie pendant le stockage dans des proportions considérables.

Divers matériaux pourront être choisis pour constituer le récipient et le couvercle, par exemple des matières plastiques ou de l'aluminium qui sont très résistants à l'humidité. On pourra en particulier choisir un matériau plastique translucide qui permettra à des clients potentiels de vérifier *de visu* le bon état de santé des organismes conditionnés dans le dispositif conforme à l'invention.

En fonction des espèces des organismes destinés à être stockés dans le dispositif de conditionnement, l'eau parcourant ledit dispositif pourra être de l'eau douce, de l'eau de mer naturelle ou de l'eau de mer reconstituée, présentant éventuellement un degré de salinité réglable.

L'écoulement de l'eau entre les entrée et sortie d'eau pourra être assuré de diverses manières, par exemple par pompage ou par simple effet de gravité, par exemple en prévoyant un dénivelé entre l'entrée d'eau et la sortie d'eau.

Ainsi, selon un mode de réalisation de l'invention, l'entrée d'eau sera aménagée à une hauteur supérieure ou égale à celle de la sortie d'eau.

Une ou plusieurs entrées d'eau peuvent ainsi être aménagées dans le couvercle du dispositif ou dans des parois latérales du récipient. Une ou plusieurs sorties d'eau peuvent être aménagées dans les parois latérales du récipient, de préférence à une hauteur inférieure à celle d'entrées d'eau également présentes dans lesdites paroi latérales, ou encore dans un fond dudit récipient.

Ainsi, selon un mode de réalisation particulier de l'invention, le récipient sera muni de parois latérales et au moins l'une desdites parois latérales comportera au moins un orifice formant une sortie d'eau du récipient.

Un tel mode de réalisation de l'invention permet au récipient de retenir en permanence un certain volume d'eau en son sein, même dans des cas où l'écoulement de l'eau entre les entrée et sortie d'eau aura été interrompu.

On pourra en particulier choisir d'aménager la sortie d'eau à une hauteur au moins égale à trois quarts d'une hauteur totale du récipient, de manière à prévenir toute fuite des organismes aquatiques par le ou les orifices de sortie ainsi que pour prévenir toute érosion ou emport d'un substrat qui pourra avantageusement être inclus dans le dispositif de conditionnement, comme indiqué dans la suite de l'exposé.

De plus, grâce à un choix judicieux d'un nombre et/ou de dimensions d'orifices de sortie d'eau relativement au nombre et/ou aux dimensions d'orifices d'entrée d'eau, un réglage du débit de l'écoulement d'eau traversant le récipient sera possible. Ceci permettra en particulier de faire en sorte que l'eau sortant du ou des orifices de sortie d'eau adhère par capillarité à la ou aux parois latérales correspondantes et se transforme en ruissellement, si un faible débit a été choisi, ou au contraire de faire en sorte que l'eau sortant du ou des orifices de sortie d'eau sorte sous la forme d'un jet sans adhérer auxdites parois latérales.

Selon un autre mode de réalisation particulier de l'invention, le récipient étant muni d'un fond, ledit fond comportera au moins un orifice formant une sortie d'eau du récipient.

Selon encore un mode de réalisation préféré de l'invention le couvercle inclura au moins un orifice formant une entrée d'eau du récipient.

Les orifices formant les entrées et sorties d'eau du récipient pourront avoir par exemple une forme circulaire, ovale, elliptique, ou encore polygonale.

Les orifices formant les entrée et sortie d'eau seront de préférence aussi éloignés que possible l'un de l'autre, de manière à ce que le flux d'eau parcoure un trajet aussi long que possible à l'intérieur du récipient afin de maximiser les effets d'oxygénation, de nourriture et de dépollution induits par la circulation dudit flux et de rendre d'éventuelles zones d'eau calme à l'intérieur du récipient aussi rares et petites que possible.

Selon un mode de réalisation particulièrement avantageux de l'invention, le couvercle est de forme essentiellement rectangulaire, et inclut deux orifices situés au voisinage de deux coins disposés sur une diagonale dudit couvercle, chacun des orifices inclus dans le couvercle étant apte à former une entrée d'eau du récipient, lequel récipient étant en outre muni d'au moins deux orifices de sortie pratiqués dans deux de ses parois latérales disposées en vis-à-vis l'une par rapport à l'autre, chacun des orifices pratiqués dans les parois latérales étant apte à former l'entrée d'eau du récipient.

Selon un autre mode de réalisation particulièrement avantageux de l'invention, le couvercle est de forme essentiellement rectangulaire, et inclut deux orifices situés au voisinage de points médians de bords latéraux dudit couvercle, chacun des orifices inclus dans le couvercle étant apte à former une entrée d'eau du récipient, lequel récipient étant en outre muni d'au moins un orifice pratiqué dans l'une des parois latérales du récipient qui est destinée à être perpendiculaire avec lesdits bords latéraux du couvercle lorsque celui-ci sera disposé sur le récipient, chacun des orifices pratiqués dans les parois latérales étant apte à former une sortie d'eau du récipient.

Dans l'un ou l'autre de ces modes de réalisation particulièrement avantageux de l'invention, quel que soit le sens choisi pour emboîter le couvercle sur le récipient, un flux d'eau pourra naturellement être établi entre l'un des orifices pratiqués dans le couvercle et au moins l'un des orifices pratiqués dans le récipient.

L'eau pourra être acheminée vers l'orifice d'entrée de diverses manières. Un mode de réalisation préféré de l'invention prévoit de réaliser le couvercle de sorte qu'il présente une surface extérieure incluant une cavité apte à recevoir un flux d'eau et à diriger ledit flux vers l'orifice inclus dans ledit couvercle qui forme l'entrée d'eau du récipient.

Ce mode de réalisation particulier ne requiert aucune précision particulière dans l'acheminement de l'eau vers l'entrée d'eau du dispositif de conditionnement. Il suffira de diriger un flux d'eau de manière à ce que ledit flux atteigne la surface extérieure du couvercle, qui assurera alors la collecte dudit flux d'eau et le canalisera vers l'orifice formant l'entrée d'eau. Un tel mode de réalisation permet en particulier de réaliser le flux d'eau sous forme discontinue, de type goutte-à-goutte, puisque toute éclaboussure produite par un impact de goutte sur la surface de la cavité du couvercle sera redirigée vers l'orifice d'entrée d'eau du dispositif de conditionnement.

La cavité du couvercle sera avantageusement apte à accueillir un fond d'un autre récipient destiné à être posé sur ledit couvercle.

Les parois latérales du récipient pourront être toutes parallèles les unes par rapport aux autres, mais pourront être inclinées de manière à ce que deux parois latérales disposées en vis-à-vis forment par exemple un "V" tronqué en s'évasant en direction du couvercle.

Un tel mode de réalisation favorise un empilement de dispositifs de conditionnement selon l'invention, le fond d'un récipient d'un dispositif de conditionnement pouvant alors s'emboîter dans la cavité du couvercle d'un dispositif de conditionnement immédiatement inférieur en préservant un jeu entre les parois latérales du récipient dudit dispositif supérieur et des rebords du couvercle dudit dispositif inférieur. Un tel jeu permettra alors un écoulement d'eau d'un dispositif de conditionnement à l'autre. Ce mode de réalisation permet ainsi d'obtenir une précision accrue dans chaque emboîtage d'un dispositif de conditionnement avec un dispositif de conditionnement qui lui est superposé, et assure en outre une bonne stabilité d'un tel empilement.

On construira de préférence des empilements de sorte que l'eau qui sort d'un récipient d'un dispositif de conditionnement soit dirigée naturellement par effet de gravité vers le couvercle du dispositif de conditionnement immédiatement inférieur, couvercle sur lequel l'eau se répandra avant d'être canalisée vers le ou les orifices aménagés dans ledit couvercle. Ainsi de l'eau qui entre par le ou les orifices du couvercle d'un dispositif disposé en haut d'une pile sera amenée à traverser tous les récipients des dispositifs superposés en-dessous dudit dispositif, jusqu'à ressortir par l'orifice de sortie d'eau d'un dispositif de conditionnement formant un socle de la pile. Un tel mode de réalisation permet ainsi de raccorder en série tous les circuits d'eau inclus dans chacun des récipients des dispositifs de conditionnement d'une même pile.

Selon un mode de mise en oeuvre particulier de l'invention, le récipient contient un substrat non-soluble dans l'eau.

La présence d'un tel substrat dans le récipient a pour but de parfaire la reproduction du milieu naturel des organismes aquatiques destinés à être conditionnés dans le dispositif conforme à l'invention. De nombreux vers aquatiques, par exemple, se complaisent dans des substrats sablonneux dans lesquels ils recherchent une protection par un enfouissement qui permet à chaque ver de s'isoler de ses congénères et de prédateurs éventuels et donc de se prémunir contre des agressions extérieures dont la possibilité est pour chaque ver un facteur de stress et d'affaiblissement de santé. Un enfouissement dans le substrat apportera également à des vers aquatiques une obscurité salutaire, car ces vers fuient la lumière qui provoque en eux un stress et altère leur santé.

Le substrat sera de préférence constitué par un matériau présentant une densité supérieure à celle de l'eau, de manière à prévenir toute fuite de ce substrat par un orifice de sortie. Un tel substrat pourra ainsi avantageusement être constitué par du sable, matériau auquel les organismes marins sont en outre naturellement acclimatés.

Parmi divers modes de mise en oeuvre possibles, l'invention concerne également un dispositif de conservation d'organismes ayant pour milieu naturel un milieu aquatique, caractérisé en ce que lesdits organismes sont disposés dans au moins un dispositif de conditionnement tel que décrit plus haut, le dispositif de conservation étant muni de moyens pour fournir au moins un flux d'eau à destination dudit dispositif de conditionnement.

Dans un mode de mise en oeuvre particulier de l'invention, un dispositif de conservation tel que décrit ci-dessus est en outre muni de moyens de pompage d'eau permettant un contrôle d'une circulation d'eau le long d'un circuit d'eau reliant une première entrée d'eau d'un premier dispositif de conditionnement à une dernière sortie d'eau d'un dernier dispositif de conditionnement, les moyens de pompage permettant de véhiculer l'eau depuis ladite dernière sortie d'eau vers ladite première entrée d'eau.

Un dispositif de conservation tel que décrit ci-dessus pourra en outre être muni de moyens de filtration du flux d'eau et, alternativement ou cumulativement, de moyens de contrôle de température dudit flux d'eau.

A cet effet, le dispositif de conservation pourra inclure un réservoir d'eau destiné à être traversé par ledit flux d'eau.

Les moyens de contrôle de température du flux d'eau pourront de plus inclure des moyens de réfrigération de l'eau contenue dans le réservoir.

D'une manière plus générale, l'invention concerne également un procédé de conservation d'organismes ayant pour milieu naturel un milieu aquatique, caractérisé en ce qu'il inclut au moins une étape de production d'un flux d'eau à une entrée d'eau d'un dispositif de conditionnement tel que décrit plus haut.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig.1 est une vue en coupe qui représente schématiquement un dispositif de conservation d'organismes aquatiques selon un mode de mise en oeuvre avantageux de l'invention,
La Fig.2, est une vue en coupe qui représente schématiquement un dispositif de conditionnement d'organismes aquatiques selon un mode de réalisation particulier de l'invention,
La Fig.3, est une vue de dessus d'un tel dispositif, et
La Fig.4 est une vue en coupe qui représente schématiquement un dispositif de conditionnement d'organismes aquatiques selon un autre mode de réalisation particulier de l'invention.

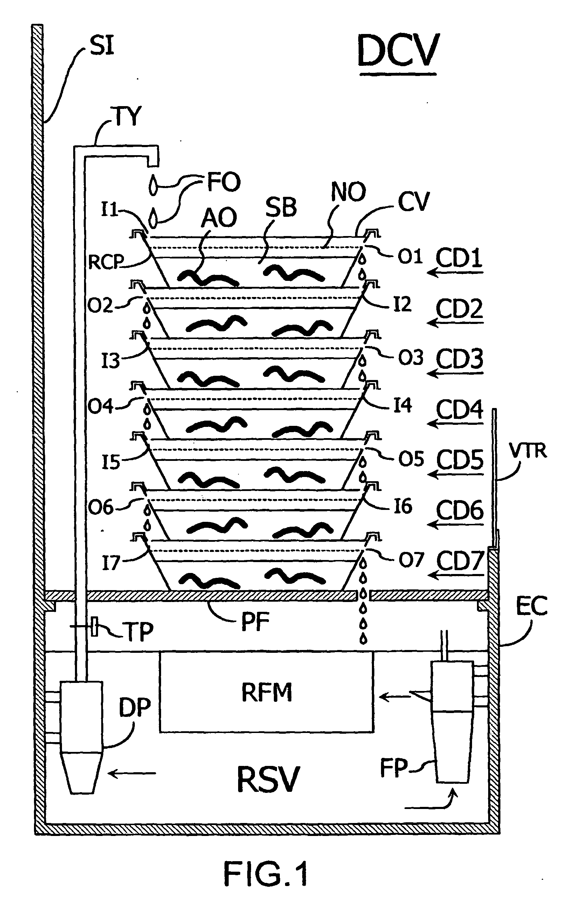

La Fig.1 représente un dispositif de conservation DCV d'organismes AO ayant pour milieu naturel un milieu aquatique, qui sont disposés dans des dispositifs de conditionnement CDi (pour i=1 à 7) empilés les uns au-dessus des autres sur une plateforme PF posée au dessus d'une enceinte EC formant un socle du dispositif de conservation DCV. Ce dispositif de conservation DCV est muni de moyens pour fournir un flux d'eau FO à destination desdits dispositifs de conditionnement CDi.

Conformément à l'invention, chaque dispositif de conditionnement CDi inclut un récipient RCP destiné à contenir un ou plusieurs organismes aquatiques AO, ledit récipient étant muni d'un couvercle CV destiné à recouvrir au moins partiellement une surface supérieure du récipient RCP. Le récipient inclus dans chaque dispositif de conditionnement CDi (pour i=1 à 7) présente une entrée d'eau Ii et une sortie d'eau Oi respectivement destinées à recevoir et à délivrer un flux d'eau traversant ledit récipient.

Dans ce mode de réalisation particulier de l'invention, l'entrée d'eau Ii d'un dispositif de conditionnement CDi est aménagée à une hauteur supérieure à celle de la sortie d'eau Oi dudit dispositif de conditionnement CDi. Ceci permet de réaliser un dénivelé entre les entrée et sortie d'eau Ii et Oi, et d'assurer ainsi un écoulement de l'eau par simple effet de gravité.

En l'occurrence, le couvercle de chaque dispositif de conditionnement CDi (pour i=1 à 7) inclut au moins un orifice formant l'entrée d'eau Ii du récipient qu'il recouvre, lequel récipient comporte en outre un orifice dans l'une de ses parois latérales, lequel orifice est destiné à former la sortie d'eau Oi du dispositif de conditionnement CDi.

Grâce à l'invention, chaque dispositif de conditionnement CDi est en permanence traversé par un flux d'eau et contient donc une partie submergée délimitée par un niveau d'eau NO déterminé par la hauteur de l'orifice formant la sortie d'eau Oi, partie submergée dans laquelle les conditions de vie habituelles des organismes aquatiques AO sont reproduites. Pour parfaire la reproduction du milieu naturel d'organismes aquatiques AO vivant habituellement enfouis, un substrat SB est inclus dans chaque récipient, de manière à permettre aux dits organismes AO de s'y réfugier pour satisfaire à leurs besoins d'obscurité et d'isolement vis-à-vis de leurs congénères ou d'autres prédateurs, ce qui contribue à la préservation de la santé desdits organismes AO.

Chaque dispositif de conditionnement CDi (pour i=1 à 7) contient en quelque sorte un circuit d'eau élémentaire, délimité par son entrée d'eau Ii et sa sortie d'eau Oi, et connecté en série avec les circuits d'eau élémentaires des autres dispositifs de conditionnement selon la configuration desdits dispositifs qui a été choisie dans cet exemple de mise en oeuvre de l'invention. Dans d'autres modes de réalisation de l'invention, on pourra choisir de connecter de tels circuits d'eau élémentaires en parallèle, au moyen de dispositifs de conditionnement dont les récipients présentent plusieurs orifices, aménagés par exemple dans des parois latérales disposées en vis-à-vis l'une par rapport à l'autre, qui formeront alors plusieurs sorties d'eau d'un tel dispositif de conditionnement, qui pourra alors être utilisé comme un boîtier de dérivation du flux d'eau FO.

On comprend aisément que, chaque dispositif de conditionnement CDi (pour i=1 à 7) contenant un circuit d'eau élémentaire, un tel dispositif de conditionnement pourra être ajouté ou soustrait à l'empilement décrit ici sans provoquer d'interruption du flux d'eau FO traversant le dispositif de conservation DCV conforme à l'invention, qui est ainsi complètement modulable.

Chaque dispositif de conditionnement CDi présentera avantageusement des dimensions réduites le rendant préhensile par une seule main et suffisamment léger et peu encombrant pour être facilement transportable et manipulable.

Le flux d'eau FO est ici discontinu, c'est-à-dire qu'il est constitué par une succession de gouttes produites à une extrémité d'un tuyau TY, ce qui est obtenu par un réglage de débit du flux d'eau FO au moyen d'une vanne TP. La nature discontinue du flux d'eau permet une meilleure oxygénation de l'eau au contact de l'air traversé par les gouttes, et offrira par conséquent une meilleure oxygénation des organismes aquatiques AO. Par ailleurs, chaque goutte, après impact sur un couvercle d'un dispositif de conditionnement se disloquera et se répartira immédiatement en une nappe fine, ce qui augmentera la surface de contact de l'eau avec l'air ambiant et contribue à oxygéner cette eau. Plus une différence de hauteur entre l'extrémité du tuyau TY et le couvercle CV du premier dispositif de conditionnement CD1 sera grande, plus l'eau véhiculée par le flux d'eau FO présentera une teneur en oxygène élevée. L'extrémité du tuyau TY pourra présenter ainsi une hauteur variable grâce à un système d'élongation ou de rétractation téléscopique dudit tuyau TY, non-représenté sur la présente Figure. L'extrémité du tuyau TY pourra en outre être munie d'un degré de liberté en rotation, de manière à ce qu'il soit possible de faire pivoter ladite extrémité pour faciliter un accès aux dispositifs de conditionnement CDi et une extraction de l'un d'eux à des fins d'examen de son contenu ou de livraison à un acheteur.

La nature discontinue du flux d'eau FO représenté ici produit en outre un effet scintillant du fait de variations dans la lumière réfléchie par chaque goutte au cours de son trajet dans l'air, lequel effet scintillant retiendra immanquablement l'attention et l'intérêt de clients potentiels situés au voisinage du dispositif de conservation DCV et les encouragera à procéder à un achat, lorsque ledit dispositif DCV sera utilisé comme présentoir sur un lieu de vente des organismes marins contenus dans les dispositifs de conditionnement CDi.

Dans l'exemple représenté ici, le couvercle CV du récipient RCP inclus dans chaque dispositif de conditionnement CDi (pour i=1 à 7) est réalisé de sorte qu'il présente une surface extérieure incluant une cavité apte à recevoir le flux d'eau FO et à diriger ce flux vers l'orifice inclus dans ledit couvercle CV qui forme l'entrée d'eau Ii du récipient RCP recouvert par ce couvercle.

Ce mode de réalisation particulier ne requiert aucune précision particulière dans l'acheminement de l'eau vers l'entrée d'eau Ii d'un dispositif de conditionnement CDi (pour i=1 à 7). Il suffira de diriger le flux d'eau de manière à ce que ledit flux atteigne la surface extérieure du couvercle, qui assurera alors la collecte dudit flux d'eau et le canalisera vers l'orifice formant l'entrée d'eau Ii. Un tel mode de réalisation favorise la réalisation du flux d'eau sous forme discontinue, de type goutte-à-goutte, puisque toute éclaboussure produite par un impact de goutte sur la surface de la cavité du couvercle sera redirigée vers l'orifice d'entrée d'eau Ii du dispositif de conditionnement CDi.

Dans ce mode de réalisation, les parois latérales de chaque récipient sont inclinées de manière à ce que deux parois latérales disposées en vis-à-vis s'évasent en formant un "V" tronqué. Un tel mode de réalisation favorise un empilement de dispositifs de conditionnement selon l'invention, le fond d'un récipient d'un dispositif de conditionnement CDj (pour j=2 à 7) pouvant alors s'emboîter dans la cavité du couvercle d'un dispositif de conditionnement immédiatement inférieur CDj-1 en préservant un jeu entre les parois latérales du récipient dudit dispositif supérieur CDj et des rebords du couvercle dudit dispositif inférieur CDj-1. Un tel jeu permettra alors un écoulement d'eau d'un dispositif de conditionnement à l'autre.

Pour éviter toute projection d'eau au voisinage du dispositif de conservation DCV, ledit dispositif est muni d'au moins une paroi de protection VTR, qui sera de préférence translucide afin de ne pas dissimuler le flux d'eau aux clients potentiels situés au voisinage du dispositif de conservation DCV, lorsque ledit dispositif DCV sera utilisé en tant que présentoir sur un lieu de vente d'organismes marins tels ceux contenus dans les dispositifs de conditionnement CDi.

Par ailleurs, dans cet exemple de mise en oeuvre de l'invention, le dispositif de conservation DCV est muni d'un support d'informations SI constitué par un panneau solidaire du socle formé par l'enceinte EC, lequel support d'informations SI pourra recevoir des affichages publicitaires de toute nature.

Dans le mode de mise en oeuvre de l'invention décrit ici, le dispositif de conservation DCV inclut des moyens de pompage d'eau DP permettant un contrôle d'une circulation d'eau le long d'un circuit d'eau reliant une première entrée d'eau I1 du premier dispositif de conditionnement CD1 à la dernière sortie d'eau 07 du dernier dispositif de conditionnement CD7, les moyens de pompage DP permettant de véhiculer l'eau depuis ladite dernière sortie d'eau 07 vers ladite première entrée d'eau Il à travers le tuyau TY via la vanne TP.

Ce dispositif de conservation DCV est en outre muni de moyens de filtration FP du flux d'eau et de moyens de contrôle de température RFM dudit flux d'eau.

A cet effet, le dispositif de conservation DCV inclut un réservoir d'eau RSV, destiné à être traversé par ledit flux d'eau, et délimité par l'enceinte EC formant le socle du dispositif de conservation DCV. Dans d'autres modes de mise en oeuvre de l'invention, un tel réservoir d'eau pourra être intégré dans une embase amovible par rapport au dispositif de conservation DCV.

Le réservoir d'eau est particulièrement utile au contrôle de température du flux d'eau FO, puisqu'il contient un volume d'eau ayant une forte inertie thermique par rapport à celle du flux d'eau FO. Ainsi, le passage dudit flux d'eau FO au travers du réservoir d'eau RSV permettra audit réservoir de transmettre une partie de sa propre énergie calorifuge audit flux d'eau si la température interne au réservoir d'eau RSV est supérieure à celle du flux d'eau FO, ce qui devra être le cas si les organismes aquatiques AO sont des organismes tropicaux habitués à une eau ayant une température plus élevée que la température ambiante du point de vente, ou permettra au contraire au réservoir d'eau RSV de prélever au flux d'eau FO une partie de son énergie calorifuge, si la température interne au réservoir d'eau RSV est inférieure à celle du flux d'eau FO, ce qui devra être le cas si les organismes aquatiques AO sont habitués à une eau ayant une température moins élevée que la température ambiante du point de vente.

Dans ce dernier cas, les moyens de contrôle de température du flux d'eau FO incluront de préférence des moyens de réfrigération RFM de l'eau contenue dans le réservoir RSV. Ces moyens de réfrigération RFM pourront revêtir différentes formes, plus ou moins onéreuses et plus ou moins efficaces. En particulier, le réservoir d'eau RSV pourra être lui-même inclus dans un réfrigérateur muni d'un condenseur, lequel réfrigérateur sera alors inclus dans l'enceinte EC, et pourra dans certains modes de réalisation être amovible par rapport au dispositif de conservation DCV. Un tel réfrigérateur pourra en outre inclure un espace réservé à des empilements d'autres dispositifs de conditionnement, lequel espace sera alors exclusivement destiné à des fins de stockage et pourra être disposé au dessus du réservoir d'eau RSV de manière à ce que ces autres dispositifs de conditionnement puissent également être parcourus par le flux d'eau.

Dans le mode de mise en oeuvre de l'invention décrit ici, les moyens de réfrigération RFM incluent un récipient contenant un liquide préalablement congelé, qui se réchauffera progressivement en prélevant de la chaleur depuis l'eau contenue dans le réservoir RSV. Dans un mode de réalisation particulièrement peu coûteux des moyens de réfrigération RFM, un tel récipient pourra être constitué par une simple bouteille d'eau dont le contenu aura été préalablement congelé, laquelle bouteille d'eau flottera alors à la surface du réservoir d'eau RSV pour ne pas interférer avec la circulation du flux d'eau et ne pas contrarier le fonctionnement des moyens de pompage DP et des moyens de filtration FP. On pourra en outre inclure dans les moyens de réfrigération thermique RFM une enveloppe d'isolation thermique destinée à recevoir la bouteille d'eau congelée et permettant une diffusion progressive dans le réservoir d'eau RSV du froid produit par ladite bouteille d'eau.

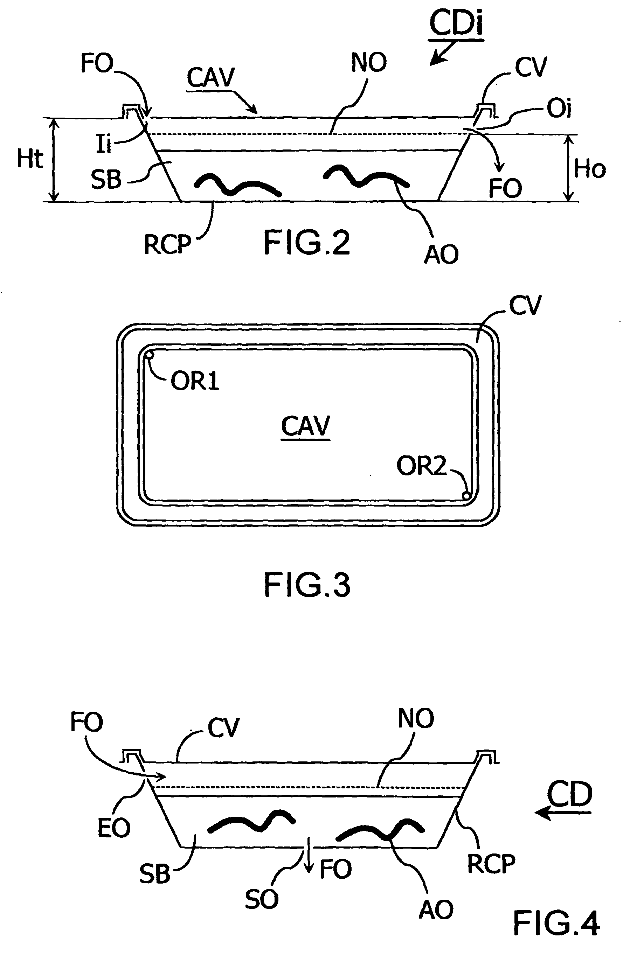

La Fig.2 représente un dispositif de conditionnement CDi conforme à un mode de réalisation particulier de l'invention, qui inclut un récipient RCP destiné à contenir des organismes aquatiques AO, ledit récipient RCP étant muni d'un couvercle CV destiné à recouvrir au moins partiellement la surface supérieure du récipient RCP, ledit récipient présentant une entrée et une sortie d'eau Ii et Oi, respectivement aménagées dans le couvercle CV et dans une paroi latérale du récipient RCP, et destinées à recevoir et à délivrer un flux d'eau FO traversant ledit récipient RCP.

Grâce à l'invention, chaque dispositif CDi est en permanence traversé par le flux d'eau FO et contient donc une partie submergée délimitée par un niveau d'eau NO déterminé par la hauteur de l'orifice formant la sortie d'eau Oi, partie submergée dans laquelle les conditions de vie habituelles des organismes aquatiques AO sont reproduites. L'orifice formant la sortie d'eau Oi sera de préférence disposé à une hauteur Ho au moins égale aux trois quarts d'une hauteur totale Ht du récipient RCP. Pour parfaire la reproduction du milieu naturel de ces organismes aquatiques AO, un substrat SB est inclus dans chaque récipient, de manière à permettre aux dits organismes AO de s'y réfugier pour satisfaire à leurs besoins d'obscurité et d'isolement vis-à-vis de leurs congénères et d'éventuels prédateurs, ce qui contribue à la préservation de la santé desdits organismes AO. Le dispositif de conditionnement CDi inclut donc en quelque en sorte un écosystème miniature parfaitement adapté aux organismes aquatiques AO destinés à y être stockés. Il a ainsi été observé que ces organismes pouvaient y subsister pendant plusieurs mois, ce qui constitue un progrès considérable par rapport aux techniques de stockage connues précédemment évoquées.

Dans ce mode de réalisation particulier de l'invention, le couvercle CV du dispositif de conditionnement CDi présente une surface extérieure incluant une cavité CAV en forme de bac apte à recevoir le flux d'eau FO et à diriger ce flux vers un orifice inclus dans ledit couvercle CV qui forme l'entrée d'eau Ii.

Selon ce mode de réalisation particulier, il suffira de diriger le flux d'eau FO de manière à ce que ledit flux atteigne la surface extérieure du couvercle CV, qui assurera alors la collecte dudit flux d'eau FO et le canalisera vers l'orifice formant l'entrée d'eau Ii. Un tel mode de réalisation favorise la réalisation du flux d'eau FO sous forme discontinue, de type goutte-à-goutte, puisque toute éclaboussure produite par un impact de goutte sur la surface de la cavité CAV du couvercle CV sera redirigée au sein de cette cavité vers l'orifice d'entrée d'eau Ii du dispositif de conditionnement CDi.

Dans ce mode de réalisation particulier, les parois latérales de chaque récipient sont inclinées de manière à ce que deux parois latérales disposées en vis-à-vis s'évasent en formant un "V" tronqué. Ainsi qu'exposé ci-dessus, ceci favorise un empilement de dispositifs de conditionnement selon l'invention, le fond d'un récipient d'un tel dispositif de conditionnement pouvant alors s'emboîter dans la cavité du couvercle d'un dispositif de conditionnement immédiatement inférieur en préservant un jeu entre les parois latérales du récipient du dispositif supérieur et des rebords du couvercle du dispositif inférieur. Un tel jeu permettra alors un écoulement d'eau d'un dispositif de conditionnement à l'autre.

La Fig.3 présente une vue de dessus du dispositif de conditionnement CDi décrit ci-dessus. Dans ce mode de réalisation particulier de l'invention, le couvercle CV est de forme essentiellement rectangulaire, et inclut deux orifices OR1 et OR2 situés au voisinage de deux coins disposés sur une diagonale dudit couvercle. L'orifice OR1, qui est le plus éloigné de l'orifice de sortie Oi du récipient RCP précédemment décrit, est destiné, lorsque le couvercle CV sera disposé sur ledit récipient dans la configuration décrite par les Figs.2 et 3, à former l'entrée d'eau dudit récipient.

Selon ce mode de réalisation particulier de l'invention, la sortie d'eau Oi étant aménagée au centre d'une paroi latérale du récipient qui est destinée à recevoir l'un des petits côtés du rectangle formé par le couvercle CV, quel que soit le sens choisi pour emboîter le couvercle sur le récipient, l'un des orifices OR1 ou OR2 pratiqués dans ledit couvercle sera aussi éloigné que possible de cette sortie d'eau Oi.

Dans un autre mode de réalisation, on pourra munir le couvercle d'un unique orifice OR1 et d'une encoche, le récipient RCP étant alors muni d'une protubérance destinée à s'insérer dans la dite encoche, de manière à former un détrompeur obligeant à disposer le couvercle CV dans un sens assurant l'établissement d'un circuit d'eau ayant la plus grande longueur possible entre l'entrée d'eau formée par l'orifice OR1 et la sortie d'eau. Si de tels modes de réalisation économisent une étape de perçage de l'orifice OR2 lors de la fabrication du couvercle CV, ils nécessitent cependant la mise en oeuvre de techniques de fabrication dudit couvercle CV et du récipient RCP plus compliquées pour réaliser le détrompeur décrit ci-dessus.

Dans encore un autre mode de réalisation de l'invention, on pourra munir le couvercle d'au moins deux orifices situés chacun au voisinage d'un point milieu d'un bord latéral du couvercle CV, et pratiquer au moins un orifice dans l'une des parois latérales du récipient qui est destinée à être perpendiculaire avec lesdits bords latéraux du couvercle CV lorsque celui-ci sera disposé sur le récipient. Un tel mode de réalisation assurera l'établissement d'au moins un circuit d'eau ayant une longueur minimale prédéterminée entre l'entrée d'eau formée par l'un ou l'autre des orifices du couvercle et la sortie d'eau formée par l'orifice ainsi pratiqué dans le récipient, et ce quel que soit le sens choisi pour emboîter le couvercle sur le récipient.

On observera en outre que le récipient RCP et son couvercle associé CV présentent des formes qui peuvent être aisément obtenues par thermoformage, et pourront être réalisés à partir de boîtes standardisées, ce qui permettra de réduire à un minimum le prix de revient d'un dispositif de conditionnement conforme à l'invention.

La Fig.4 représente un dispositif de conditionnement CD conforme à un autre mode de réalisation particulier de l'invention, qui inclut un récipient RCP destiné à contenir des organismes aquatiques AO, ledit récipient RCP étant muni d'un couvercle CV destiné à recouvrir au moins partiellement la surface supérieure du récipient RCP, ledit récipient présentant une entrée et une sortie d'eau EO et SO, respectivement destinées à recevoir et à délivrer un flux d'eau FO traversant ledit récipient RCP.

Selon cet autre mode de réalisation de l'invention, l'une des parois latérales du récipient RCP comporte un orifice formant l'entrée d'eau EO du dispositif de conditionnement CD. Le récipient RCP présente en outre un fond qui comporte un orifice formant la sortie d'eau SO du dispositif de conditionnement CD.

Dans cet autre mode de réalisation de l'invention, le dispositif CD est en permanence traversé par le flux d'eau FO et contient une partie submergée, délimitée par un niveau d'eau NO, et obtenue en remplissant dans un premier temps le récipient RCP avec un débit plus rapide que le débit de l'écoulement produit au travers de la sortie d'eau SO, puis en stabilisant le débit du flux FO à une valeur voisine de celle du débit produit par la sortie d'eau SO.

On pourra en outre prévoir de munir le récipient RCP d'un tube creux sensiblement vertical non-représenté ici, destiné à remplir le rôle de trop-plein, l'une des extrémités de ce tube étant placée en contact avec l'orifice de sortie, une autre extrémité dudit tube affleurant juste au-dessus du niveau d'eau NO que l'on souhaite obtenir.

Dans un autre mode de réalisation de l'invention, la sortie d'eau pourra être aménagée dans la paroi du récipient RCP qui est disposée en vis-à-vis de la paroi dans laquelle est aménagée l'entrée d'eau EO, à une hauteur inférieure à ladite entrée d'eau EO, une telle sortie d'eau jouant alors en quelque sorte un rôle de trop-plein, comme c'est le cas dans le mode de réalisation de l'invention décrit dans les Figs.1 et 2.

## Revendications

1. Dispositif de conditionnement d'au moins un organisme ayant pour milieu naturel un milieu aquatique, incluant au moins
- un récipient destiné à contenir ledit organisme, ledit récipient étant muni de parois latérales et d'un couvercle destiné à recouvrir au moins partiellement une surface supérieure du récipient,
- ledit récipient présentant une entrée et une sortie d'eau respectivement destinées à recevoir et à délivrer un flux d'eau traversant ledit récipient,
- au moins l'une desdites parois latérales comportant au moins un orifice formant une sortie d'eau du récipient,
- ledit couvercle présentant une surface extérieure incluant une cavité apte à recevoir un flux d'eau et à diriger ledit flux vers au moins un orifice inclus dans ledit couvercle qui forme l'entrée d'eau du récipient, **caractérisé en ce que** :
les parois latérales dudit récipient sont inclinées de manière à ce que deux parois latérales en vis-à-vis comportant au moins un orifice formant une sortie d'eau du récipient s'évasent en formant un "V" tronqué, l'inclinaison étant telle que le fond d'un dispositif de conditionnement puisse s'emboîter dans la cavité du couvercle d'un dispositif de conditionnement immédiatement inférieur avec un jeu entre les parois latérales du récipient dudit dispositif de conditionnement supérieur et des rebords du couvercle dudit dispositif de conditionnement inférieur.

2. Dispositif de conditionnement selon la revendication 1, **caractérisé en ce que** la sortie d'eau est aménagée à une hauteur au moins égale à trois quarts d'une hauteur totale du récipient.

3. Dispositif de conditionnement selon l'une des revendications 1 ou 2, **caractérisé en ce que**, le couvercle étant de forme essentiellement rectangulaire; il inclut deux orifices situés au voisinage de deux coins disposés sur une diagonale dudit couvercle; chacun des orifices inclus dans le couvercle étant apte à former une entrée d'eau du récipient; lequel récipient étant en outre muni d'au moins deux orifices de sortie pratiqués dans deux de ses parois latérales disposées en vis-à-vis l'une par rapport à autre, chacun des orifices pratiqués dans les parois latérales étant apte à former la sortie d'eau du récipient.

4. Dispositif de conditionnement selon l'une des revendications 1 ou 2, **caractérisé en ce que** le couvercle étant de forme essentiellement rectangulaire, il inclut deux orifices situés au voisinage de points médians de bords latéraux dudit couvercle, chacun des orifices inclus dans le couvercle étant apte à former une entrée d'eau du récipient; lequel récipient étant en outre muni d'au moins un orifice pratiqué dans l'une des parois latérales du récipient qui est destinée à être perpendiculaire avec lesdits bords latéraux du couvercle lorsque celui-ci sera disposé sur le récipient, chacun des orifices pratiqués dans les parois latérales étant apte à former une sortie d'eau du récipient.

5. Dispositif de conditionnement selon l'une des revendications 1 à 4, **caractérisé en ce que** la cavité du couvercle est apte à accueillir un fond d'un autre récipient destiné à être posé sur ledit couvercle.

6. Dispositif de conditionnement selon l'une des revendications 1 à 5, **caractérisé en ce que** les parois latérales sont inclinées de manière à ce que deux parois latérales disposées en vis-à-vis s'évasent en direction du couvercle,

7. Dispositif de conditionnement selon l'une des revendications 1 à 6, **caractérisé en ce que** le récipient inclut un substrat non-soluble dans l'eau.

8. Dispositif de conservation d'organismes ayant pour milieu naturel un milieu aquatique, **caractérisé en ce que** lesdits organismes sont disposés dans au moins un dispositif de conditionnement selon l'une des revendications 1 à 7, le dispositif de conservation étant muni de moyens pour fournir au moins un flux d'eau à destination dudit dispositif de conditionnement.

9. Dispositif de conservation selon la revendication 8, **caractérisé en ce qu'**il est en outre muni de moyens de pompage d'eau permettant un contrôle d'une circulation d'eau le long d'un circuit d'eau reliant une première entrée d'eau d'un premier dispositif de conditionnement à une dernière sortie d'eau d'un dernier dispositif de conditionnement; les moyens de pompage permettant de véhiculer l'eau depuis ladite dernière sortie d'eau vers ladite première entrée d'eau.

10. Dispositif de conservation selon l'une des revendications 8 ou 9, **caractérisé en ce qu'**il est en outre muni de moyens de filtration du flux d'eau.

11. Dispositif de conservation selon l'une des revendications 8 à 10, **caractérisé en ce qu'**il est en outre muni de moyens de contrôle de température dudit flux d'eau.

12. Dispositif de conservation selon l'une des revendications 8 à 11, **caractérisé en ce qu'**il inclut en outre un réservoir d'eau destiné à être traversé par le flux d'eau.

13. Dispositif de conservation selon la revendication 12, **caractérisé en ce que** les moyens de contrôle de température dudit flux d'eau incluent des moyens de réfrigération de l'eau contenue dans le réservoir.

14. Procédé de conservation d'organismes ayant pour milieu naturel un milieu aquatique, **caractérisé en ce qu'**il inclut au moins une étape de production d'un flux d'eau à une entrée d'eau d'un dispositif de conditionnement selon l'une des revendications 1 à 7.

## Claims

1. Device for packaging at least one organism which has an aquatic environment as a natural environment, comprising at least
- one receptacle which is intended to contain the organism, the receptacle being provided with lateral walls and a cover which is intended to at least partially cover an upper surface of the receptacle,
- the receptacle having a water inlet and a water outlet which are intended to receive and supply a flow of water which passes through the receptacle, respectively,
- at least one of the lateral walls comprising at least one hole which forms a water outlet of the receptacle,
- the cover having an outer surface which comprises a cavity which is capable of receiving a flow of water and directing the flow towards at least one hole which is included in the cover which forms the water inlet of the receptacle, **characterised in that**:
the lateral walls of the receptacle are inclined so that two lateral walls which are arranged facing each other and which comprise at least one hole which forms a water outlet of the receptacle widen to form a truncated "V", the inclination being such that the base of a packaging device is able to fit into the cavity of the cover of a packaging device which is immediately below, with a clearance between the lateral walls of the receptacle of the upper packaging device and the edges of the cover of the lower packaging device.

2. Packaging device according to claim 1, **characterised in that** the water outlet is provided at a height at least equal to three quarters of a total height of the receptacle.

3. Packaging device according to either claim 1 or claim 2, **characterised in that**, since the cover is substantially rectangular, it comprises two holes which are located in the region of two corners which are arranged on a diagonal line of the cover, each of the holes included in the cover being capable of forming a water inlet of the receptacle; the receptacle being further provided with at least two outlet holes which are formed in two of the lateral walls thereof arranged facing each other, each of the holes formed in the lateral walls being able to form the water outlet of the receptacle.

4. Packaging device according to either claim 1 or claim 2, **characterised in that**, since the cover is substantially rectangular, it includes two holes which are located in the region of central points of lateral edges of the cover, each of the holes included in the cover being capable of forming a water inlet of the receptacle; the receptacle further being provided with at least one hole which is formed in one of the lateral walls of the receptacle which is intended to be perpendicular to the lateral edges of the cover when it is arranged on the receptacle, each of the holes formed in the lateral walls being capable of forming a water outlet of the receptacle.

5. Packaging device according to any one of claims 1 to 4, **characterised in that** the cavity of the cover is capable of receiving a base of another receptacle which is intended to be placed on the cover.

6. Packaging device according to any one of claims 1 to 5, **characterised in that** the lateral walls are inclined in such a manner that two lateral walls arranged facing each other widen in the direction of the cover.

7. Packaging device according to any one of claims 1 to 6, **characterised in that** the receptacle contains a substrate which is insoluble in water.

8. Device for preserving organisms which have an aquatic environment as a natural environment, **characterised in that** the organisms are arranged in at least one packaging device according to any one of claims 1 to 7, the preservation device being provided with means for providing at least one flow of water intended for the packaging device.

9. Preservation device according to claim 8, **characterised in that** it is further provided with water pumping means which allow a flow of water to be controlled along a water circuit which connects a first water inlet of a first packaging device to a last water outlet of a last packaging device, the pumping means allowing the water to be conveyed from the last water outlet to the first water inlet.

10. Preservation device according to either claim 8 or claim 9, **characterised in that** it is further provided with means for filtering the flow of water.

11. Preservation device according to any one of claims 8 to 10, **characterised in that** it is further provided with means for controlling the temperature of the flow of water.

12. Preservation device according to any one of claims 8 to 11, **characterised in that** it further comprises a water reservoir through which the flow of water is intended to pass.

13. Preservation device according to claim 12, **characterised in that** the means for controlling the temperature of the flow of water comprise means for cooling the water contained in the reservoir.

14. Method for preserving organisms which have an aquatic environment as a natural environment, **characterised in that** it comprises at least one step for producing a flow of water at a water inlet of a packaging device according to any one of claims 1 to 7.

## Patentansprüche

1. Vorrichtung zur Verpackung mindestens eines Organismus, dessen natürlicher Lebensraum ein wässriges Milieu ist, mindestens umfassend
- einen Behälter, der dazu bestimmt ist, den Organismus zu enthalten, wobei der Behälter versehen ist mit Seitenwänden sowie mit einem Deckel, der dazu bestimmt ist, eine obere Oberfläche des Behälters mindestens teilweise abzudecken,
- wobei der Behälter eine Eintrittsöffnung und eine Austrittsöffnung für Wasser aufweist, die dazu bestimmt sind, einen Wasserstrom, der den Behälter durchläuft, aufzunehmen beziehungsweise abzugeben,
- wobei mindestens eine der Seitenwände mindestens eine Öffnung aufweist, die eine Wasseraustrittsöffnung des Behälters bildet,
- wobei der Deckel eine äußere Oberfläche aufweist, die einen Hohlraum umfasst, der dazu geeignet ist, einen Wasserstrom aufzunehmen und diesen Strom mindestens einer Öffnung zuzuführen, welche in dem Deckel enthalten ist und die Wassereintrittsöffnung des Behälters bildet, **dadurch gekennzeichnet, dass**:
die Seitenwände des Behälters derart geneigt sind, dass zwei sich gegenüberliegende Seitenwände, die mindestens eine Öffnung aufweisen, welche eine Wasseraustrittsöffnung des Behälters bildet, sich in Form eines abgestumpften "V" erweitern, wobei die Neigung derart ist, dass der Boden der Verpackungsvorrichtung in den Hohlraum des Deckels einer sich unmittelbar darunter befindlichen Verpackungsvorrichtung gesteckt werden kann, wobei ein Spielraum zwischen den Seitenwänden des Behälters der oberen Verpackungsvorrichtung und den Rändern des Deckels der unteren Verpackungsvorrichtung verbleibt.

2. Verpackungsvorrichtung nach Anspruch 1, **dadurch gekennzeichnet,**
**dass** die Wasseraustrittsöffnung in einer Höhe angeordnet ist, die mindestens gleich drei Vierteln einer Gesamthöhe des Behälters ist.

3. Verpackungsvorrichtung nach einem der Ansprüche 1 oder 2, **dadurch gekennzeichnet, dass** der Deckel im Wesentlichen von rechteckiger Form ist; er zwei Öffnungen umfasst, die in der Nähe von zwei Ecken gelegen sind, welche auf einer Diagonale des Deckels angeordnet sind; wobei jede der Öffnungen, welche der Deckel umfasst, dazu geeignet ist, eine Wassereintrittsöffnung des Behälters zu bilden; wobei der Behälter darüber hinaus mit mindestens zwei Austrittsöffnungen versehen ist, die in zwei seiner Seitenwände, welche einander gegenüberliegen, erstellt sind, wobei jede der Öffnungen, die in die Seitenwände erstellt sind, dazu geeignet ist, den Wasseraustritt des Behälters zu bilden.

4. Verpackungsvorrichtung nach einem der Ansprüche 1 oder 2, **dadurch gekennzeichnet, dass** der Deckel im Wesentlichen von rechteckiger Form ist; er zwei Öffnungen umfasst, die in der Nähe von Mittelpunkten von Seitenrändern des Deckels angeordnet sind, wobei jede der Öffnungen, welche der Deckel umfasst, dazu geeignet ist, eine Wassereintrittsöffnung des Behälters zu bilden; wobei der Behälter darüber hinaus mit mindestens einer Öffnung versehen ist, die in eine der Seitenwände gemacht wurde, welche dazu bestimmt ist, mit den Seitenwänden des Deckels einen rechten Winkel zu bilden, wenn dieser auf dem Behälter angeordnet ist, wobei jede der Öffnungen, die in die Seitenwände gemacht wurden, dazu geeignet ist, eine Wasseraustrittsöffnung des Behälters zu bilden.

5. Verpackungsvorrichtung nach einem der Ansprüche 1 bis 4, **dadurch gekennzeichnet, dass** der Hohlraum des Deckels dazu bestimmt ist, einen Boden eines anderen Behälters aufzunehmen, der dazu bestimmt ist, auf den Deckel gestellt zu werden.

6. Verpackungsvorrichtung nach einem der Ansprüche 1 bis 5, **dadurch gekennzeichnet, dass** die Seitenwände derart geneigt sind, dass zwei Seitenwände, die gegenüberliegend angeordnet sind, sich in Richtung des Deckels erweitern.

7. Verpackungsvorrichtung nach einem der Ansprüche 1 bis 6, **dadurch gekennzeichnet, dass** der Behälter ein Substrat umfasst, das in Wasser unlöslich ist.

8. Vorrichtung zur Aufbewahrung von Organismen, deren natürlicher Lebensraum ein wässriges Milieu ist, **dadurch gekennzeichnet, dass** sich die Organismen in mindestens einer Verpackungsvorrichtung nach einem der Ansprüche 1 bis 7 befinden, wobei die Aufbewahrungsvorrichtung mit Mitteln versehen ist, um mindestens einen Wasserstrom bereitzustellen, der für die Verpackungsvorrichtung bestimmt ist.

9. Aufbewahrungsvorrichtung nach Anspruch 8, **dadurch gekennzeichnet, dass** sie darüber hinaus mit Wasserpumpmitteln versehen ist, die es ermöglichen, eine Wasserströmung derart zu steuern, dass sie einen Kreislauf beschreibt, der eine erste Wassereintrittsöffnung einer ersten Verpackungsvorrichtung mit einer letzten Wasseraustrittsöffnung einer letzten Verpackungsvorrichtung verbindet; wobei die Pumpmittel es ermöglichen, das Wasser von der letzten Wasseraustrittsöffnung zur ersten Wassereintrittsöffnung zu befördern.

10. Aufbewahrungsvorrichtung nach einem der Ansprüche 8 oder 9, **dadurch gekennzeichnet, dass** sie darüber hinaus mit Mitteln zum Filtrieren des Wasserstroms versehen ist.

11. Aufbewahrungsvorrichtung nach einem der Ansprüche 8 bis 10, **dadurch gekennzeichnet, dass** sie darüber hinaus mit Mitteln zur Steuerung der Temperatur des Wasserstroms versehen ist.

12. Aufbewahrungsvorrichtung nach einem der Ansprüche 8 bis 11, **dadurch gekennzeichnet, dass** sie darüber hinaus einen Wasservorratsbehälter umfasst, der dazu bestimmt ist, von dem Wasserstrom durchlaufen zu werden.

13. Aufbewahrungsvorrichtung nach Anspruch 12, **dadurch gekennzeichnet, dass** die Mittel zur Steuerung der Temperatur des Wasserstroms Mittel zur Kühlung des Wassers, welches in dem Vorratsbehälter enthalten ist, umfassen.

14. Verfahren zur Aufbewahrung von Organismen, deren natürlicher Lebensraum ein wässriges Milieu ist, **dadurch gekennzeichnet, dass** es mindestens einen Schritt zum Erzeugen eines Wasserstroms zu einer Wassereintrittsöffnung einer Verpackungsvorrichtung nach einem der Ansprüche 1 bis 7 umfasst.
